# EUROPEAN PATENT APPLICATION

(11) **EP 2 262 193 A1**
(43) Date of publication of application: **15.12.2010**
(21) Application number: 09730716.9
(22) Date of filing: 10.04.2009
(51) Int. Cl.: H04L 12/58

(54) **METHOD AND APPARATUS FOR PRESENTING NOTIFICATION MESSAGES**

(30) Priority: 11.04.2008 CN 200810091048; 04.11.2008 CN 200810172292
(71) Applicant: Huawei Technologies Co., Ltd., Longgang District, Shenzhen Guangdong 518129 (CN)
(72) Inventor: ZHANG, Huiping, Longgang District 518129, Shenzhen (CN); CHEN, Guoqiao, Longgang District 518129, Shenzhen (CN); YANG, Jian, Longgang District 518129, Shenzhen (CN); WANG, Lei, Longgang District 518129, Shenzhen (CN); FAN, Shunan, Longgang District 518129, Shenzhen (CN); DONG, Ting, Longgang District 518129, Shenzhen (CN)
(74) Representative: Kreuz, Georg Maria
(86) International application number: PCT/CN2009/071215
(87) International publication number: WO 2009/124507

(57) **Abstract**

A method and an apparatus for presenting a notification message in a mobile broadcast service are disclosed. The method includes: receiving a notification message that carries presentation information; and presenting the notification message according to the presentation information. Through the present invention, the server can deliver information about the mode of presenting the notification message to the terminal, and the terminal presents the notification message according to the mode, thus enriching the service contents and improving the user experience.

## Description

This application claims priority to Chinese Patent Application No. 200810091048.2, filed with the Chinese Patent Office on April 11, 2008 and entitled "Method and Apparatus for Presenting Notification Message in BCAST", and Chinese Patent Application No. 200810172292.1, filed with the Chinese Patent Office on November 4, 2008 and entitled "Method and Apparatus for Presenting Notification Message in BCAST", which are hereby incorporated by reference in their entireties.

### FIELD OF THE INVENTION

The present invention relates to the field of communications technologies, and in particular, to a method and an apparatus for presenting a notification message.

### BACKGROUND OF THE INVENTION

Mobile digital multimedia broadcast is a brand new broadcast technology developed on the basis of mobile digital audio broadcast. It introduces the multimedia broadcast service into mobile terminals such as mobile phone. The mobile television service based on the mobile multimedia broadcast technology is one of the most advanced mobile multimedia services available now. The mobile communications technology enables transmission of the mobile phone television service, possibly at the cost of occupying the bandwidth of the bidirectional symmetric channel, or by means of directional transmission or multicast. However, with rapid increase of users, it is difficult to fulfill the requirements of the network service cost and Quality of Service (QoS) assurance. In fact, the transmission of large-capacity multimedia services such as video impose asymmetric requirements for the network, namely, the downlink data traffic is far greater than the uplink data traffic, and the broadcast mode is more appropriate for the downlink direction. Broadcast imposes almost no restriction on user quantity, and brings distinct advantages with respect to the ratio of using the resources such as spectrum, user capacity of the system, and service costs. Generally speaking, mobile broadcast is capable of propagating multimedia contents massively at low costs and with high efficiency.

Mobile television enables a user to receive television programs anytime and anywhere, and more importantly, integrates interaction technologies and enables the content providers or service providers to design more attracting interactive application programs, to create brand new watching experience, and to generate appealing value-added services.

The mobile phone television service involves massive broadcast and mobile phone communications systems. Therefore, the communications actions such as data transmission, decoding, and switching need to be performed through consistent interface standards. Mobile Broadcast (BCAST) Services are a standard about the application layer of the mobile multimedia broadcast/multicast service, and is put forward by the Open Mobile Alliance (OMA). As regards broadcast, the OMA BCAST provides the traditional one-to-many broadcast mode and multicast mode, and will connect the original digital broadcast service on the existing network architecture. The OMA BCAST is committed to service discovery and acquisition, electronic program/service guide, charging, and content/service protection, formulates specific service engines, and ensures them to be independent of the bearer layer.

In the OMA BCAST, the defined service engines (Enablers) are responsible for integrating Content Providers (CPs), Broadcast Distribution Systems (BDSs) and terminals in the whole system on the application layer, and making the system independent of the lower-layer network. The BDS is applicable to different distribution networks such as Multimedia Broadcast / Multicast Service (MBMS), Broadcast Multicast Service (BCMCS), and Digital Video Broadcast - Handheld (DVB-H).

The BCAST includes the following functional modules:
(1) Service Guide Function;
(2) File Distribution Function;
(3) Stream Distribution Function;
(4) Service Protection and Content Protection Functions;
(5) Service Interaction Function;
(6) Service Provisioning Function;
(7) Notification Function; and
(8) Terminal Provisioning Function.

However, the following problems have become apparent in the prior art:
In the notification message of the foregoing BCAST service, the supported media types are limited and include only pictures, audios, videos, and the like. Moreover, the notification message does not carry any description about how to present the content, for example, in which position of the screen the media objects (such as texts and pictures) are displayed, whether the media objects occupy the whole screen or are overlapped on the existing content, and whether the caption is displayed through flash or needs to be clicked by the user. Besides, the BCAST service does not specify how to present the interactive advertisements or switch over the events.

### SUMMARY OF THE INVENTION

The invention provides a method and an apparatus for presenting a notification message. Therefore, the server can deliver notification message presentation information to the terminal, and the terminal can present the notification message according to the presentation information.

According to the first aspect of the invention a method for presenting a notification message includes in its first implementation form:
receiving a notification message that carries presentation information; and
presenting the notification message according to the presentation information.

In its second implementation form the method for presenting a notification message includes:
generating a notification message that carries presentation information; and
sending the notification message.

According to the second aspect of the invention a terminal includes:
a receiving module, configured to receive a notification message that carries presentation information;
an identifying module, configured to identify type of the presentation information carried in the notification message received by the receiving module; and
a presenting module, configured to present the notification message according to an identification result of the identifying module.

According to the third aspect of the present invention a server includes:
a generating module, configured to generate a notification message that carries presentation information; and
a sending module, configured to send the notification message generated by the generating module.

Compared with the prior art, the technical solution under the present invention brings these benefits: Because the notification message is extended to carry more media types and carry the presentation mode, the server can deliver the presentation mode of the notification message to the terminal, and the terminal presents the notification message according to the presentation mode. This enriches the service contents and improves the user experience.

### BRIEF DESCRIPTION OF THE DRAWINGS

FIG. 1 is a schematic view showing a flowchart of a method for presenting a notification message in the first embodiment of the present invention;
FIG. 2 is a schematic view showing a flowchart that a terminal receives and presents contents of a notification message in the third embodiment of the present invention;
FIG. 3 is a schematic view showing a flowchart that a terminal receives and presents contents of a notification message in the fourth embodiment of the present invention;
FIG. 4 is a schematic view showing a structure of a terminal provided in the fifth embodiment of the present invention;
FIG. 5 is a schematic view showing a flowchart of a method for presenting a notification message in the sixth embodiment of the present invention; and
FIG. 6 is a schematic view showing a structure of a server provided in the seventh embodiment of the present invention.

### DETAILED DESCRIPTION OF THE EMBODIMENTS

The embodiments of the invention provide a method and an apparatus for presenting a notification message. Therefore, the server can deliver notification message presentation information to the terminal, and the terminal can present the notification message according to the presentation information.

The implementation of the present invention is described in more detail below with reference to the accompanying drawings and some exemplary embodiments.

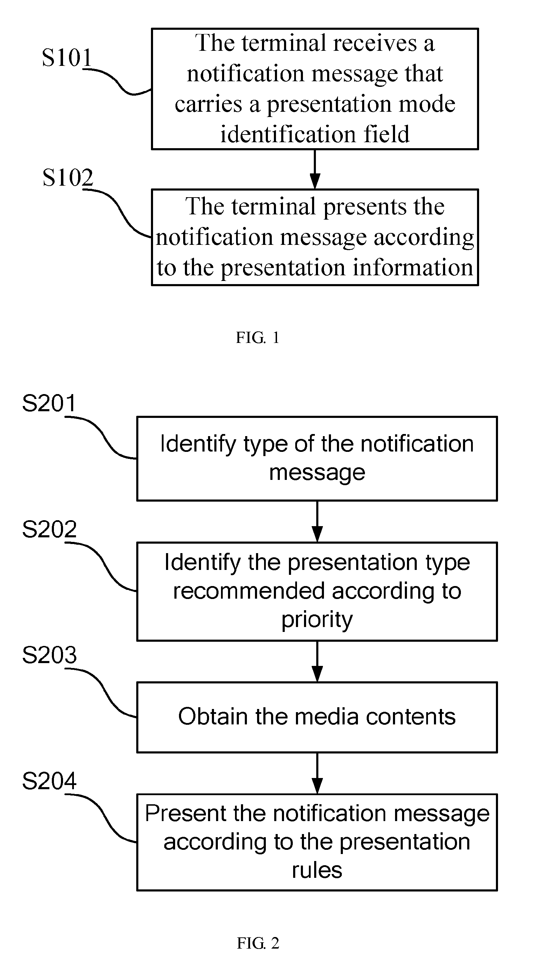

FIG. 1 is a schematic view showing a flowchart of a method for presenting a notification message in the first embodiment of the present invention. The method includes:
Step S101: The terminal receives a notification message that carries a presentation mode identification field.
Step S102: The terminal presents the notification message according to the presentation information.

Specifically, the presentation information includes one or more of the following four types:
(1) Media information descriptive of presentation: The media information carried in the notification message is stored in a "mediaInformation" field. Currently, only three media types (pictures, audios and videos) are supported. Through the method provided in this embodiment, the media information descriptive of presentation is added, and more media types can be carried in the notification message.
   After identifying the media information in the notification message, the terminal presents the identified media file.
(2) Information that describes the presentation rules of presenting the contents carried in the notification message: This field is added for extending the notification message to support description of the mode of presentating the contents of the notification message.
   After identifying the presentation rule of the notification message, the terminal presents the media object in the notification message according to the rule.
(3) Reference identifier of presentation information of media objects of the notification message: This field is added to extend the notification message and make the notification message not limited to the media contents carried in the notification message. More importantly, reference file index information is given in the notification message so that the contents outside the notification message are available. The terminal obtains the media file of the presentation information, and presents the media objects in the notification message according to the description in the file.
(4) Rich media content presentation information: This field is added for extending the notification message to enable the terminal to obtain rich media contents and present the contents of the notification message according to the description information in the rich media data.

Among the foregoing types of presentation information, the media information descriptive of presentation, the reference identifier of presentation information of media objects of the notification message, and the rich media content presentation information are all rich media data information carried in the notification message.

Among the four types of presentation information above, one type of presentation information may exist in the notification message to extend the corresponding content, and multiple types of presentation information may also exist in the notification message to extend multiple types of contents, which are all covered in the protection scope of the present invention.

Through this embodiment, the supported media types are extended in the notification message, the description about the presentation rule is more useful, more media information is carried in the notification message, the information presentation mode is enriched, the user experience is improved, and the service is diversified.

Through specific solutions to modifying the notification message in the subsequent embodiments, the technical solution under the present invention is elaborated below.

The second embodiment of the present invention provides a method for extending presentation description information. Through this method, the notification message can carry more media types.

In the prior art, the media information carried in the notification message exists in a "mediaInformation" field, and supports only three media types: picture, audio and video, which restricts the contents carried in the notification message and affects diversification of services.

As shown in Table 1, this embodiment extends the media types by extending the media information descriptive of presentation.

**Table 1 Notification message that carries more media information descriptive of presentation**

| **Name** | **Type** | **Cardinality** | **Description** | **Data Type** |
|---|---|---|---|---|
| Notification Message | E | | Notification message | |
| id | A | 1 | Notification message identifier | anyURI |
| version | A | 1 | Notification message version information | unsignedInt |
| Notification Type | A | 1 | Notification type. | unsignedByte |
| | | | Possible values: | |
| | | | 0 - user-oriented message | |
| | | | 1 - terminal-oriented message | |
| | | | 2-255: others | |
| eventType | A | 1 | Notification event type carried in notification message | unsignedByte |
| validTo | A | 0..1 | Deadline of validity period of notification message | |
| Description | E1 | 0..N | Notification description or message | string |
| Presentation Type | E1 | 1 | Presentation type recommended according to priority. | unsignedByte |
| | | | Possible values: | |
| | | | 0 - notification message of high priority: The terminal can interrupt all applications and present this message immediately; | |
| | | | 1 - notification message of medium priority: The terminal can overwrite the service being played currently, and present this message immediately; | |
| | | | 2 - notification message of low priority: The terminal may present this message when required by the user; | |
| | | | 3-255: others | |
| Media Information | E1 | 0..1 | For constructing and presenting notification message | |
| Picture | E2 | 0..N | Defining how to obtain a picture and MIME type | |
| mimeType | A | 0..1 | MIME type of picture | string |
| pictureURI | A | 0..1 | Reference to Uniform Resource Identifier (URI) of a picture | anyURI |
| Video | E2 | 0..N | Defining how to obtain a video and MIME type | |
| mimeType | A | 0..1 | MIME type of video | string |
| codec | A | 0..1 | Codec parameters related to MIME media type | string |
| videoURI | A | 0..1 | Reference to URI of video | anyURI |
| Audio | E2 | 0..N | Defining how to obtain an audio and MIME type | |
| mimeType | A | 0..1 | MIME type of audio | string |
| codec | A | 0..1 | Codec parameters related to MIME media type | string |
| audioURI | A | 0..1 | Reference to URI of audio | anyURI |
| flash | E2 | 0..N | Defining how to obtain a flash and MIME type | |
| mimeType | A | 0..1 | MIME type of flash | string |
| flashURI | A | 0..1 | Reference to URI of flash | anyURI |
| Svg | E2 | 0..N | Defining how to obtain a Scalable Vector Graphics (SVG) and MIME type | |
| mimeType | A | 0..1 | MIME type of svg | string |
| svgURI | A | 0..1 | Reference to URI of svg | anyURI |

Table 2 shows the added media information descriptive of presentation:

**Table 2 Media information descriptive of presentation**

| | | | | |
|---|---|---|---|---|
| flash | E2 | 0..N | Defining how to obtain a flash and MIME type | |
| mimeType | A | 0..1 | MIME type of flash | string |
| flashURI | A | 0..1 | Reference to URI of flash | anyURI |
| Svg | E2 | 0..N | Defining how to obtain an svg and MIME type | |
| mimeType | A | 0..1 | MIME type of svg | string |
| svgURI | A | 0..1 | Reference to URI of svg | anyURI |

In the embodiment described above, the media information of the flash type and the svg type is added. The types given above are for the exemplary purpose only. In practice, the method provided in this embodiment may be used to add more types of media information such as text, script, Synchronized Multimedia Integration Language (SMIL), and Extensible Markup Language (XML). Such variations derived from the technical conception of the present invention are covered in the protection scope of the present invention.

Through the method for carrying media information descriptive of presentation above, the notification message can carry more types of media information, the services are diversified, and the user experience is improved.

The third embodiment of the present invention provides a method for adding fields in the notification message. The fields describe the presentation rules of presenting the contents carried in the notification message, and the terminal presents the contents of the notification message according to the presentation rules specified in the field after receiving the notification message.

Depending on the type of the notification message and the type of the event, the contents of the notification message vary. The message contents given in this embodiment are for the exemplary purpose only. The notification message is extended to support description of the presentation mode of the contents of the notification message.

Table 3 shows the notification message that carries additional fields describing the presentation rules of presenting the contents of the notification message.

**Table 3 Notification message that carries fields describing presentation rules of presenting contents of notification message**

| **Name** | **Type** | **Cardinality** | **Description** | **Data Type** |
|---|---|---|---|---|
| Notification Message | E | | Notification message | |
| id | A | 1 | Notification message identifier | anyURI |
| version | A | 1 | Notification message version information | unsignedInt |
| Notification Type | A | 1 | Notification type. Possible values: | unsignedByte |
| | | | 0 - user-oriented message | |
| | | | 1 - terminal-oriented message 2-255: others | |
| eventType | A | 1 | Notification event type carried in a notification message | unsignedByte |
| validTo | A | 0..1 | Deadline of validity period of notification message | |
| Description | E1 | 0..N | Notification description or message | string |
| Presentation Type | E1 | 1 | Presentation type recommended according to priority. | unsignedByte |
| | | | Possible values: | |
| | | | 0 - notification message of high priority: The terminal can interrupt all applications and present this message immediately; | |
| | | | 1 - notification message of medium priority: The terminal can overwrite the service being played currently, and present this message immediately; | |
| | | | 2 - notification message of low priority: The terminal may present this message when required by the user; | |
| | | | 3-255: others | |
| Media Information | E1 | 0..1 | For constructing and presenting notification message | |
| Picture | E2 | 0..N | Defining how to obtain a picture and MIME type | |
| Id | A | 0..1 | Picture identifier | anyURI |
| mimeType | A | 0..1 | MIME type of picture | string |
| pictureURI | A | 0..1 | Reference to URI of picture | anyURI |
| Video | E2 | 0..N | Defining how to obtain a video and MIME type | |
| Id | A | 0..1 | Video identifier | anyURI |
| mimeType | A | 0..1 | MIME type of video | string |
| codec | A | 0..1 | Codec parameters related to MIME media type | string |
| videoURI | A | 0..1 | Reference to URI of video | anyURI |
| Audio | E2 | 0..N | Defining how to obtain an audio and MIME type | |
| Id | A | 0..1 | Audio identifier | anyURI |
| mimeType | A | 0..1 | MIME type of audio | string |
| codec | A | 0..1 | Codec parameters related to MIME media type | string |
| audioURI | A | 0..1 | Reference to URI of audio | anyURI |
| renderingRule | E1 | 0..1 | Description of Presentation rule | |
| viewBox | E2 | 0..N | Position and size of presentation window | |
| width | A | 1 | Window width | unsignedInt |
| height | A | 1 | Window height | unsignedInt |
| Original | A | 1 | Coordinate of original point of window | CDATA |
| MediaID | E3 | 0..N | Reference to media identifier | anyURI |
| Rendering Time | A | 0..1 | Start time of presentation | unsignedInt |
| duration | A | 0..1 | Duration of presentation | unsignedInt |

Table 4 shows the part that describes the presentation rules of presenting contents of the notification message.

**Table 4 Information that describes presentation rules of presenting contents of notification message**

| **renderingRule** | **E1** | **0..1** | **Description of Presentation rule** | |
|---|---|---|---|---|
| viewBox | E2 | 0..N | Position and size of presentation window | |
| width | A | 1 | Window width | unsignedInt |
| height | A | 1 | Window height | unsignedInt |
| Original | A | 1 | Coordinate of original point of window | CDATA |
| MediaID | E3 | 0..N | Reference to media identifier | anyURI |
| renderingTime | A | 0..1 | Start time of presentation | unsignedInt |
| duration | A | 0..1 | Duration of presentation | unsignedInt |

FIG. 2 is a schematic view showing a flowchart that a terminal receives and presents contents of a notification message, taking one notification message as an example. The process includes the following steps:

The notification message in the XML format is:

```
       <?xml version="1.0" encoding="UTF-8"?>
       <NotificationMessage id=" 10489" version=" 1.0" NotificationType ="0" eventType="5"
       validTo="21536" >
          <PresentationType> 1 </PresentationType>
          <Medialnformation>
              <Video id="00175" mimeType="video/mpg" codec="mpeg"
       videoURI="www.example.com/clip.mpg" />
          </MediaInformation>
          <renderingRule>
               <viewBox width="300px" height="200px" original="0 0 1500 1000">
                    <mediaID renderingTime="20070319T1400" > 00175 </mediaID>
               </viewBox>
       </renderingRule>
       </NotificationMessage>
```

Step S201: Identify the type of the notification message.

Through the message, the terminal knows that the notification message is user-oriented (NotificationType="0"), namely, the message needs to be presented to the user.

Step S202: Identify the presentation type recommended according to priority.

The PresentationType value is 1, so the terminal chooses to present the contents of the notification message by overlapping them with the contents being played.

Step S203: Obtain the media contents.

The terminal obtains the video media object from "www.example.com /clip.mpg" according to MediaInformation.

Step S204: Present the notification message according to the presentation rules.

The window is defined as: window width = "300px", window height = "200px", identifier of original point of window = "0 0 1500 1000".

The terminal presents the notification message according to the presentation rules, namely, plays the video obtained from "www.example.com/clip.mpg" in the position specified by viewBox on the screen at the time specified by renderingTime.

The format of the notification message and the process of processing the message given above are for the exemplary purpose only. In practical application, adjustment may be made according to the technical conception of the present invention. For example, the presentation rules may be more complex, the presentation rules may be described in other modes, and the processing steps of the terminal may be modified as required, which are all covered in the protection scope of the present invention.

A method for extending the description of the presentation rules of presenting the contents of the notification message in the notification message is provided in the embodiments of the present invention. By using this method, the server can specify the presentation rules of presenting the contents of the notification message in the notification message, and the terminal presents the contents of the notification message according to the presentation rules specified in the fields after receiving the notification message.

The fourth embodiment of the invention adds a reference identifier of notification message presentation information into the notification message to extend the contents of the notification message and make the notification message not limited to the media contents carried in the notification message. More importantly, reference file index information is given in the notification message so that the contents outside the notification message are available. The terminal obtains the media file of the presentation information through the reference identifier, and presents the notification message according to the description in the file.

Table 5 shows the notification message that carries additional fields describing the presentation modes of the contents outside the notification message, where the fields are added as a result of extending the reference identifier of the notification message presentation information.

**Table 5 Notification message that carries additional fields describing presentation modes of contents outside notification message**

| **Name T** | **Name** | **Cardinality** | **Description** | **Data Type** |
|---|---|---|---|---|
| Notification Message | E | | Notification message | |
| id | A | 1 | Notification message identifier | anyURI |
| version | A | 1 | Notification message version information | unsignedInt |
| Notification Type | A | 1 | Notification type. Possible values: | unsignedByte |
| | | | 0 - user-oriented message | |
| | | | 1 - terminal-oriented message 2-255: others | |
| eventType | A | 1 | Notification event type carried in a notification message | unsignedByte |
| validTo | A | 0..1 | Deadline of validity period of notification message | |
| Description | E1 | 0..N | Notification description or message | string |
| PresentationT ype | E1 | 1 | Presentation type recommended according to priority. Possible values: | unsignedByte |
| | | | 0 - notification message of high priority: The terminal can interrupt all applications and present this message immediately; | |
| | | | 1 - notification message of medium priority: The terminal can overwrite the service being played currently, and present this message immediately; | |
| | | | 2 - notification message of low priority: The terminal may present this message when required by the user; | |
| | | | 3-255: others | |
| Media Information | E1 | 0..1 | For constructing and presenting notification message | |
| Picture | E2 | 0..N | Defining how to obtain a picture and MIME type | |
| mimeType | A | 0..1 | MIME type of picture | string |
| pictureURI | A | 0..1 | Reference to URI of picture | anyURI |
| Video | E2 | 0..N | Defining how to obtain a video and MIME type | |
| mimeType | A | 0..1 | MIME type of video | string |
| codec | A | 0..1 | Codec parameters related to MIME media type | string |
| videoURI | A | 0..1 | Reference to URI of video | anyURI |
| Audio | E2 | 0..N | Defining how to obtain an audio and MIME type | |
| mimeType | A | 0..1 | MIME type of audio | string |
| codec | A | 0..1 | Codec parameters related to MIME media type | string |
| audioURI | A | 0..1 | Reference to URI of audio | anyURI |
| renderType | E2 | | | |
| Rme | E3 | 0..1 | Defining how to obtain a Rich Media Environment (RME) and MIME type | |
| mimeType | A | 0..1 | MIME type of RME | string |
| rmeURI | A | 0..1 | Reference to URI of RME | anyURI |

Table 6 shows the reference identifier part that describes the notification message presentation information.

**Table 6 Reference identifier that describes presentation information of contents indicated by notification message**

| **RenderType** | **E2** | | | |
|---|---|---|---|---|
| Rme | E3 | 0..1 | Defining how to obtain an RME and MIME type | |
| mimeType | A | 0..1 | MIME type of RME | string |
| rmeURI | A | 0..1 | Reference to URI of RME | anyURI |

A "renderType" is added on the basis of the original notification message. The "renderType" field indicates the content of presentation information of the notification message. In this embodiment, after receiving the notification message, the terminal obtains an RME file, and presents the notification message according to the RME file.

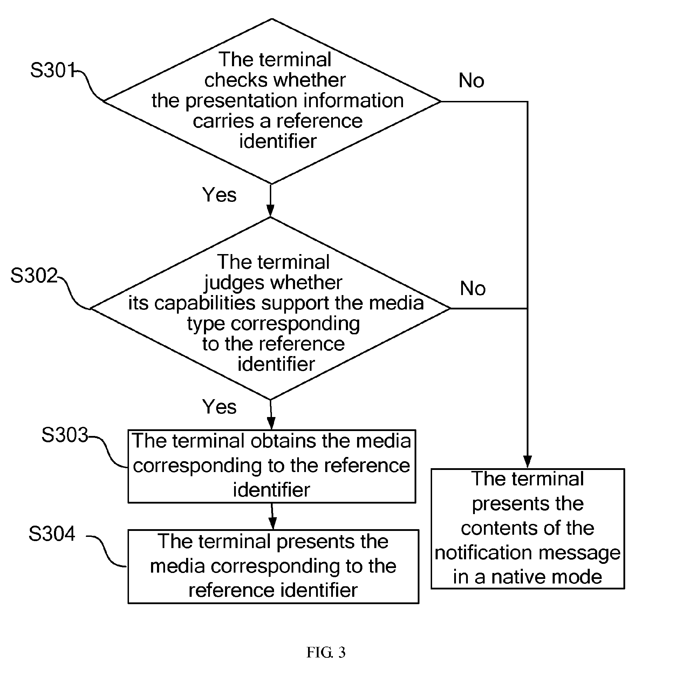

FIG. 3 is a schematic view showing a flowchart that a terminal receives and presents contents of a notification message, taking the foregoing notification message as an example. The process includes the following steps:

Step S301: The terminal checks whether the presentation information carries a reference identifier.

If the presentation information carries a reference identifier, the process proceeds to step S302.

If the presentation information carries no reference identifier, the terminal presents the contents of the notification message according to the prior art, namely, in a native mode.

Specifically, taking the foregoing notification message as an example, the terminal checks whether the notification message carries a "renderType" field.

Step S302: The terminal judges whether its capabilities support the media type corresponding to the reference identifier.

If the terminal capabilities support the media type, the process proceeds to step S303.

If the terminal capabilities do not support the media type, the terminal presents the contents of the notification message in a native mode.

Taking the foregoing notification message as an example, if the "mimeType" of the "renderType" field in the notification message is RME, the terminal judges whether the RME is supported; if the terminal does not support the RME, the terminal presents the contents of the notification message in a native mode.

Step S303: The terminal obtains the media corresponding to the reference identifier.

Taking the foregoing notification message as an example, if the terminal supports the RME media type, the terminal obtains the RME file according to the "rmeURI" in the "renderType" field. The RME file describes how to present contents of the notification message.

Step S304: The terminal presents the media corresponding to the reference identifier.

The terminal presents the contents of the notification message in an RME mode.

In the compatible processing method provided in this embodiment, the notification message carries media file information descriptive of the presentation mode. After the notification message is delivered to the terminal through a broadcast/multicast channel, because the terminal capabilities vary, some terminals do not support the media type in use. In this case, the terminal that does not support the media type presents the notification message in a native mode, and the terminal that supports the media type presents the notification message in the mode indicated by the notification message media file. If the notification message is delivered in a point-to-point mode, the server may choose to deliver the notification message in the extended format of the notification message as described in this embodiment, or deliver the notification message in the original notification message format, depending on the terminal capabilities.

It should be emphasized that the extensions and application of the notification message described above are for the exemplary purpose only. In practice, the notification message may carry not only a file of the RME media type, but also a file of other media types such as script, SVG, SMIL, Extensible HyperText Markup Language (XHTML), and HyperText Mark-up Language (HTML). The terminal presents the notification message according to the information carried in such media files.

In the embodiment described above, the notification message carries a reference identifier of the notification message presentation information. The terminal obtains the description information file, and presents the contents of the notification message according to the description information. Unlike the third embodiment, this embodiment puts the information file descriptive of the presentation outside the notification message. The terminal obtains the presentation information file such as rmeURI through the notification message, and presents the contents of the notification message according to the file. Because the length of a notification message is limited, this embodiment enables large size of description information about the presentation mode of the notification message, supports the presentation information of more media types, and provides diversified modes of presenting the notification message.

The fifth embodiment of the invention provides a method for extending the presentation information that describes the contents indicated by the notification message. This method extends the contents of the notification message, and makes the notification message not limited to the media contents carried in the notification message. Moreover, the notification message can carry rich media information to cite the rich media data; and stream session information can be added in the notification message so that the terminal can obtain the rich media stream data successfully when the cited rich media type is rich media streams. The terminal obtains the media file of presentation information, and presents the notification message according to the file.

Accordingly, this embodiment provides a method for a notification message to carry presentation information. The notification message carries rich media information that describes the mode of presenting contents of the notification message. The terminal obtains the rich media file, and presents the notification message according to the file.

As shown in Table 7, this embodiment extends the media type by extending the rich media information.

**Table 7 Notification message that carries additional fields descriptive of rich media information**

| **Name** | **Type** | **Cardinality** | **Description** | **Data Type** |
|---|---|---|---|---|
| Notification Message | E | | Notification message | |
| id | A | 1 | Notification message identifier | anyURI |
| version | A | 1 | Notification message version information | unsignedInt |
| notificationTy pe | A | 1 | Notification type. Possible values: | unsignedByte |
| | | | 0 - user-oriented message | |
| | | | 1 - terminal-oriented message | |
| | | | 2-255: others | |
| eventType | A | 1 | Notification event type carried in a notification message | unsignedByte |
| validTo | A | 0..1 | Deadline of validity period of notification message | unsignedInt |
| Description | E1 | 0..N | Notification description or message | string |
| Session Information | E1 | 0..N | The notification message is directed to another session, and is used for file downloading or update, SG downloading or update, or auxiliary data downloading. | |
| | | | After receiving a notification message that carries "SessionInformation", the terminal accesses the session defined by "SessionInformation", and performs the corresponding action, for example, receives the content in the session | |
| validFrom | A | 0..1 | Start time of validity period of notification message | unsignedInt |
| validTo | A | 0..1 | Deadline of validity period of notification message | unsignedInt |
| usageType | A | 0..1 | Transmission object type. | unsignedByte |
| | | | Possible values: | |
| | | | 0 - undefined | |
| | | | 1 - file | |
| | | | 2- stream | |
| | | | 3 - SGDD | |
| | | | 4 - SGDD and SGDU | |
| | | | 5 - notification | |
| | | | 6-255 reserved | |
| | | | Default value: 0 | |
| Delivery Session | E2 | 0..1 | Destination transmission session information specified by notification message | |
| ipAddress | A | 1 | Destination IP address of destination transmission session | string |
| port | A | 1 | Destination port of destination transmission session | unsignedShort |
| sourceIP | A | 0..1 | Source IP address of destination transmission session | string |
| Transmission SessionID | A | 1 | Transmission session identifier of ALC/LCT level | unsignedShort |
| Transport ObjectID | E3 | 0..N | Transmission object identifier which is transmitted through a transmission session | positiveInteger |
| Alternative URI | E2 | 0..1 | URI for receiving an object from the interaction channel. If the terminal is unable to access the specified transmission session, the terminal may receive the object related to the notification message through AlternativeURI | anyURI |
| Streaming Session | E2 | 0..1 | Destination streaming session information specified by notification message | |
| ipAddress | A | 0..1 | Destination IP address of destination transmission session | string |
| Port | A | 0..1 | Destination port of destination transmission session | unsignedShort |
| SourceIP | A | 0..1 | Source IP address of destination transmission session | string |
| PresentationT ype | E1 | 1 | Presentation type recommended according to priority. Possible values: | unsignedByte |
| | | | 0 - notification message of high priority: The terminal can interrupt all applications and present this message immediately; | |
| | | | 1 - notification message of medium priority: The terminal can overwrite the service being played currently, and present this message immediately; | |
| | | | 2 - notification message of low priority: The terminal may present this message when required by the user; | |
| | | | 3-255: others | |
| Media Information | E1 | 0..1 | For constructing and presenting notification message | |
| Picture | E2 | 0..N | Defining how to obtain a picture and MIME type | |
| mimeType | A | 0..1 | MIME type of picture | string |
| pictureURI | A | 0..1 | Reference to URI of picture | anyURI |
| Video | E2 | 0..N | Defining how to obtain a video and MIME type | |
| mimeType | A | 0..1 | MIME type of video | string |
| codec | A | 0..1 | Codec parameters related to MIME media type | string |
| videoURI | A | 0..1 | Reference to URI of video | anyURI |
| Audio | E2 | 0..N | Defining how to obtain an audio and MIME type | |
| mimeType | A | 0..1 | MIME type of audio | string |
| codec | A | 0..1 | Codec parameters related to MIME media type | string |
| audioURI | A | 0..1 | Reference to URI of audio | anyURI |
| renderType | E2 | | | |
| RichMedia Info | E3 | 0..1 | Defining how to obtain rich media data | |
| Type | A | 0..1 | Type of rich media data, for example, RME, Dynamic Interactive Multimedia Scene (DIMS), Lightweight Application Scene Representation (LASeR), and SVG | string |
| Version | A | 0..1 | Rich media version specified by "Type", for example, LASeR has version 1.0 and version 2.0 | unsignedInt |
| URI | A | 0..1 | Rich media URI specified by "Type" | anyURI |

Table 7 shows extension of the existing notification message format in this embodiment. The extension part is as follows:

A "streamingSession" element is added in the "SessionInformation" field in the prior art to describe streaming session information, including streaming session address such as destination IP address, source IP address, and port ID, as shown in Table 8:

**Table 8 Streaming session description information**

| | | | | |
|---|---|---|---|---|
| Streaming Session | E2 | 0..1 | Destination streaming session information specified by notification message | |
| ipAddress | A | 0..1 | Destination IP address of destination transmission session | String |
| Port | A | 0..1 | Destination port of destination transmission session | unsigned Short |
| SourceIP | A | 0..1 | Source IP address of destination transmission session | String |

A "RichMediaInfo" element is added on the basis of the notification message in the prior art, as shown in Table 9:

**Table 9 Rich media data description information**

| | | | | |
|---|---|---|---|---|
| RichMediaInfo | E3 | 0..1 | Defining how to obtain rich media data | |
| Type | A | 0..1 | Type of rich media data, for example, RME, DIMS, LASeR, and SVG | String |
| Version | A | 0..1 | Rich media data version specified by "Type", for example, LASeR has version 1.0 and version 2.0 | unsigned Int |
| URI | A | 0..1 | Rich media data URI specified by "Type" | anyURI |

The rich media data describes the notification message presentation information, as detailed below:
"RichMediaInfo" defines rich media data description information;
"Type" represents type of rich media data, for example, RME, DIMS, LASeR, and SVG;
"Version" represents rich media data version specified by "Type", for example, LASeR has version 1.0 and version 2.0; and
"URI" represents the rich media data URI specified by "Type".
In practical application, the rich media data may be transmitted to the terminal in any of the following modes:

### (1) Broadcast channel file:

Rich media data exists in the form of files, and is delivered through broadcast.

The "SessionInformation" (more specifically, "deliverySession" subelement) in the notification message describes the file transmission session information, including the file transmission address such as source IP address, destination IP address, port ID, and transmission object ID. The terminal receives the rich media data file by accessing this session.

### (2) Broadcast channel stream:

Rich media data exists in the form of streams, and is delivered through a broadcast channel.

The "SessionInformation" (more specifically, "streamingSession" subelement) in the notification message describes the stream transmission session information, including streaming session address such as destination IP address, source IP address, and port ID. The terminal receives rich media data streams by accessing this session.

### (3) Interactive channel (the terminal obtains rich media data through an interactive channel):

The notification message defines the address of the data to be obtained interactively, for example, "alternativeURI" in the "SessionInformation" element, or "URI" in the "RichMediaInfo". If a value is assigned to such addresses, the terminal may request to obtain the relevant rich media data from the specified URI.

Further, relative to the rich media data description information provided in Table 9, the version information mentioned in this embodiment may be carried in the "Type" attribute. As shown in Table 10, the extension part changes to:

**Table 10 Description information of rich media data with version information being carried in a Type element**

| | | | | |
|---|---|---|---|---|
| RichMediaInfo | E3 | 0..1 | Defining how to obtain rich media data | |
| Type | A | 0..1 | Type of rich media data | String |
| URI | A | 0..1 | Rich media data URI specified by "Type" | anyURI |

The value of "Type" may be RME, SVG, LASeR, or DIMS, or a value that carries version, for example, LASeR 1.0, LASeR 2.0, and DIMS 1.0.

In the embodiment described above, the notification message is extended to carry rich media data, and the terminal obtains the rich media data and presents the contents of the notification message according to the description information in the rich media data.

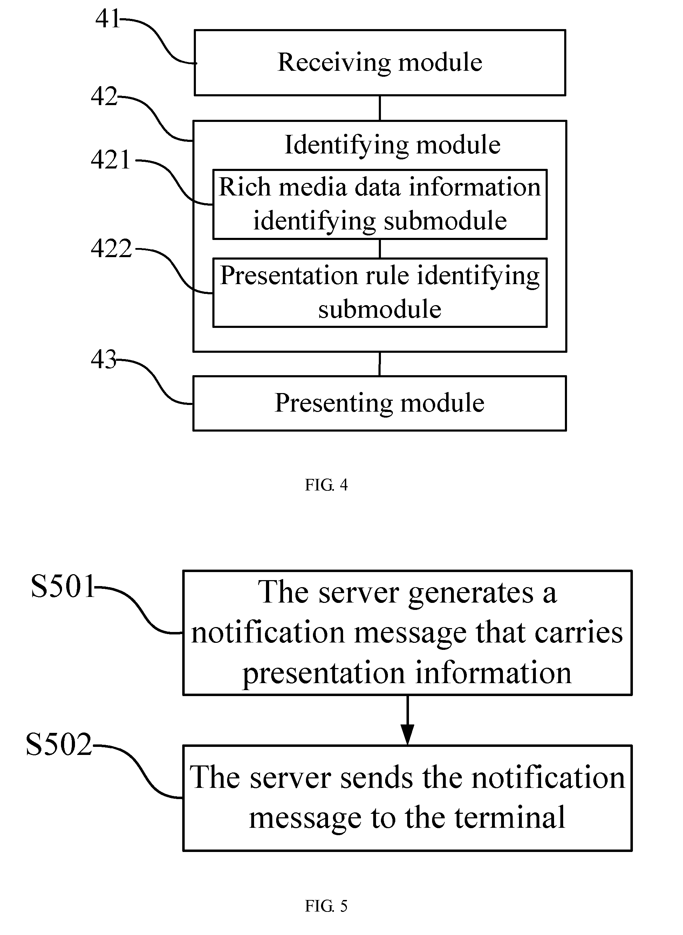

FIG. 4 is a schematic view showing a structure of a terminal in the fifth embodiment of the present invention. The terminal includes:
a receiving module 41, configured to receive a notification message that carries presentation information;
an identifying module 42, configured to identify type of the presentation information carried in the notification message received by the receiving module 41; and
a presenting module 43, configured to present the broadcast service indicated by the notification message according to an identification result of the identifying module 42.

The identifying module 42 may include:
a rich media data information identifying submodule 421, configured to identify the rich media data information carried in the notification message; and/or
a presentation rule identifying submodule 422, configured to identify the presentation rules defined by the presentation information in the notification message.

The rich media data information includes: rich media data type, and/or rich media data version information, and/or address for obtaining rich media data.

All the submodules above may exist in the identifying module 42, or only one of more of them are deployed as required, which are all covered in the protection scope of the present invention.

The technical solution under the present invention brings these benefits: Because the notification message is extended to carry more media types and carry the presentation mode, the server can deliver the presentation mode of the notification message to the terminal, and the terminal presents the interactive service according to the presentation mode, which enriches the service contents and improves the user experience.

The embodiments above describe the technical solution under the present invention from the perspective of the receiving terminal. In order to expound the complete technical conception of the present invention, the following embodiment describes the technical solution from the perspective of the server that sends the notification message.

FIG. 5 is a schematic view showing a flowchart of a method for presenting a notification message in the sixth embodiment of the invention. The method includes the following steps:

Step S501: The server generates a notification message that carries presentation information.

The presentation information includes one or more of the information types described in the first embodiment of the present invention, namely:
media type information descriptive of presentation: The generated notification message carries a media file descriptive of presentation:
information descriptive of presentation rules of presenting contents in the notification message: The generated notification message carries the information that describes presentation rules of presenting contents of the notification message. The presentation rule information includes: window position, window shape, display time, display contents, coordinates of original point of window, or any combination thereof;
reference identifier that describes presentation information of contents indicated by the notification message: The generated notification message carries presentation information, where the presentation information carries a reference identifier, the media type information corresponding to the reference identifier, and the media storage URI corresponding to the reference identifier; and
information about presentation type of rich media contents in the notification message: The generated notification message presentation information carries description information of the rich media data. The terminal can obtain the corresponding rich media data according to the description information.

Among the foregoing types of presentation information, the media type information descriptive of presentation, the reference identifier of presentation information of media objects of the notification message, and the information about the presentation type of the rich media contents in the notification message are all rich media data information carried in the notification message.

Step S502: The server sends a notification message to the terminal.

The technical solution provided in this embodiment brings these benefits: Because the notification message is extended to carry more media types and carry the presentation mode, the server can deliver the presentation mode of the notification message to the terminal, and the terminal presents the interactive service according to the presentation mode, which enriches the service contents and improves the user experience.

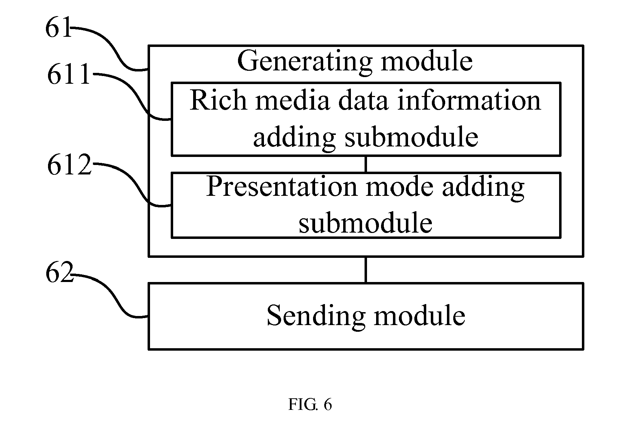

FIG. 6 is a schematic view showing a structure of a server in the seventh embodiment of the present invention. The server includes:
a generating module 61, configured to generate a notification message that carries presentation information; and
a sending module 62, configured to send the notification message generated by the generating module 61.

The generating module 61 includes:
a rich media data information adding submodule 611, configured to add the rich media data information into the notification message; and
a presentation mode adding submodule 612, configured to add information about presentation rules of presenting contents of the notification message into the notification message; and

The rich media data information includes: rich media data type, and/or rich media data version information, and/or address for obtaining rich media data.

All the submodules above may exist in the generating module 61, or only one of more of them are deployed as required, which are all covered in the protection scope of the present invention.

The technical solution provided in this embodiment brings these benefits: Because the notification message is extended to carry more media types and carry the presentation mode, the server can deliver the presentation mode of the notification message to the terminal, and the terminal presents the interactive service according to the presentation mode, which enriches the service contents and improves the user experience.

Through the descriptions of the preceding embodiments, those skilled in the art may understand that the present invention may be implemented by hardware only or by software and necessary universal hardware. Based on such understandings, the technical solution under the present invention may be embodied in the form of a software product. The software product may be stored in a nonvolatile storage medium, which can be a Compact Disk Read-Only Memory (CD-ROM), Universal Serial Bus (USB) flash drive, or a removable hard drive. The software product includes a number of instructions that enable a computer device (personal computer, server, or network device) to execute the methods provided in the embodiments of the present invention.

The above descriptions are merely specific embodiments of the present invention, but not intended to limit the present invention.

## Claims

1. A method for presenting a notification message, comprising:
receiving a notification message that carries presentation information; and
presenting the notification message according to the presentation information.

2. The method for presenting a notification message according to claim 1, wherein the presentation information comprises:
rich media data information; and/or
presentation rule information.

3. The method for presenting a notification message according to claim 2, wherein: if the presentation information is rich media data information, the rich media data information comprises:
rich media data type, and/or rich media data version information, and/or an address for obtaining the rich media data.

4. The method for presenting a notification message according to claim 3, wherein:
the address for obtaining the rich media data comprises: a file session address, or a streaming session address, or a Uniform Resource Identifier, URI, of the rich media data.

5. The method for presenting a notification message according to claim 1, wherein:
the presentation information describes how to obtain rich media data for presenting the notification message and type of the rich media data.

6. The method for presenting a notification message according to claim 5, wherein:
the presentation information describes how to obtain the rich media data for presenting the notification message, wherein:
if the notification message carries file transmission session information, the rich media data is obtained from a transmission session; or
if the notification message carries streaming session information, the rich media data is obtained from a streaming session; or
if the notification message carries an address for obtaining the rich media data interactively, the rich media data is obtained from the address.

7. The method for presenting a notification message according to claim 3 or 4, wherein types of the rich media data comprise:
Rich Media Environment, RME, or Lightweight Application Scene Representation, LASeR, or Dynamic Interactive Multimedia Scene, DIMS, or Scalable Vector Graphics, SVG, or LASeR 1.0.

8. The method for presenting a notification message according to claim 2, wherein:
if the presentation information is the rich media data information, the presentation information further comprises:
streaming session description information.

9. The method for presenting a notification message according to claim 2, wherein:
if the presentation information is the presentation rule information, the presenting of the notification message according to the presentation rule information comprises:
identifying presentation rules indicated in the presentation rule information that describes rules of presenting contents of notification message; and
presenting the notification message according to the presentation rules.

10. A method for presenting a notification message, comprising:
generating a notification message that carries presentation information; and sending the notification message.

11. The method for presenting a notification message according to claim 10, wherein the presentation information comprises:
rich media data information carried in the notification message; and/or
presentation rule information that describes rules of presenting contents of the notification message.

12. The method for presenting a notification message according to claim 11, wherein:
if the presentation information is the rich media data information carried in the notification message, the rich media data information comprises:
rich media data type, and/or rich media data version information, and/or an address for obtaining the rich media data.

13. The method for presenting a notification message according to claim 10, wherein the generating of the notification message that carries the presentation information is:
if the presentation information is rich media data information carried in the notification message, generating a notification message that carries rich media data description information; or
if the presentation information is presentation rule information that describes rules of presenting contents of the notification message, generating a notification message that carries the presentation rule information.

14. The method for presenting a notification message according to claim 12, wherein types of the rich media data comprise:
Rich Media Environment, RME, or Lightweight Application Scene Representation, LASeR, or Dynamic Interactive Multimedia Scene, DIMS, or Scalable Vector Graphics, SVG, or LASeR 1.0.

15. A terminal, comprising:
a receiving module, configured to receive a notification message that carries presentation information;
an identifying module, configured to identify type of the presentation information carried in the notification message received by the receiving module; and
a presenting module, configured to present the notification message according to an identification result of the identifying module.

16. The terminal according to claim 15, wherein the identifying module comprises:
a rich media data information identifying submodule, configured to identify rich media data information carried in the notification message; and/or
a presentation rule identifying submodule, configured to identify presentation rules defined by the presentation information in the notification message.

17. The terminal according to claim 16, wherein the rich media data information comprises:
rich media data type, and/or rich media data version information, and/or an address for obtaining the rich media data.

18. A server, comprising:
a generating module, configured to generate a notification message that carries presentation information; and
a sending module, configured to send the notification message generated by the generating module.

19. The server according to claim 18, wherein the generating module comprises:
a rich media data information adding submodule, configured to add rich media data information into the notification message; and
a presentation mode adding submodule, configured to add information about presentation rules of contents of the notification message into the notification message.

20. The server according to claim 18, wherein rich media data information comprises:
rich media data type, and/or rich media data version information, and/or an address for obtaining the rich media data.
